(19) Europäisches Patentamt
European Patent Office
Office européen des brevets

(11) Publication number: 0 221 957 B1

(12) EUROPEAN PATENT SPECIFICATION

(45) Date of publication of patent specification: 31.10.90

(51) Int. Cl.$^5$: C 08 F 277/00, C 08 F 279/00

(21) Application number: 86903100.5

(22) Date of filing: 05.05.86

(86) International application number: PCT/US86/00982

(87) International publication number: WO 86/06733 20.11.86 Gazette 86/25

# (54) REINFORCED WEATHERABLE THERMOPLASTIC MANUFACTURING PROCESS.

(30) Priority: 06.05.85 US 732014

(43) Date of publication of application: 20.05.87 Bulletin 87/21

(45) Publication of the grant of the patent: 31.10.90 Bulletin 90/44

(84) Designated Contracting States: BE DE FR GB IT NL SE

(73) Proprietor: THE DOW CHEMICAL COMPANY
2030 Dow Center Abbott Road P.O. Box 1967
Midland Michigan 48640-1967 (US)

(72) Inventor: TIEN, Li, C.
4412 Huron Drive
Midland, MI 48640 (US)
Inventor: BRUBAKER, Joseph, D.
3278 Monroe Road
Midland, MI 48640 (US)
Inventor: HARWOOD, Daniel, D.
2515 Somerset, Apartment 107
Troy, MI 48084 (US)

(74) Representative: Burford, Anthony Frederick et al
W.H. Beck, Greener & Co. 7 Stone Buildings
Lincoln's Inn
London WC2A 3SZ (GB)

(56) References cited:
DE-A-2 516 321
US-A-2 769 804
US-A-3 639 372
US-A-3 660 535
US-A-3 671 608
US-A-3 876 727
US-A-4 209 599
US-A-4 243 781
US-A-4 314 041
US-A-4 324 868
US-A-4 567 232
US-A-4 594 391

The file contains technical information submitted after the application was filed and not included in this specification

EP 0 221 957 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for preparing reinforced thermoplastic resins. More particularly, the present invention relates to a unique process particularly adapted to preparation of grafted amorphous olefin rubber, chlorinated polyethylene rubber or other ultraviolet light stabilized rubber modified polymers or copolymers. According to the invention, a process is employed using a recirculated reactor design to achieve essentially steady conversion during the polymerization of reinforced thermoplastics of the above general description.

In U.S. Patent 3,671,608 there is disclosed a process for preparing a plastic composition, more particularly, EPDM rubber modified plastic. According to the reference, an improved product is prepared by combining an elastomer of ethylene, propylene and a nonconjugated diene (EPDM), an alkenyl aromatic monomer, an acrylic monomer, an organic solvent and a free radical initiator in a reactor operating under conditions so as to provide for the presence of at least 15 percent conversion of the monomers. This partially reacted mixture acts as a seed mixture and must be present in order to prepare a rubber modified plastic having superior mechanical properties. During the polymerization, stirring is employed in order to provide thorough mixing of the seed mixture with the monomers to be polymerized. In a continuous embodiment of the process, a portion of the reaction mixture is allowed to remain in an intermediate stage of conversion in the reactor in order to provide the seed mixture for the fresh feed.

In U.S. Patent 4,314,041 a similar process for continuously preparing EPDM modified thermoplastic resins is provided.

In U.S. Patent 3,660,535 a polymerization process for preparing impact polystyrene employing partial recirculation is disclosed. In the process, a stratifying polymerizer is employed wherein a portion of a partially polymerized feed stream is removed from the reactor at a point subsequent to phase inversion and reintroduced into the reactor and the feed stream at a location prior to phase inversion. The amount of material so recirculated could vary from 5 to several hundred percent based on the feed rate of the monomer stream to the reactor.

U.S. Patent No. 4,209,599 discloses continuous mass polymerization of olefinically unsaturated monomers in the presence of an initiator carried out in one or more tubular reactors with 50% to 95% of the discharged reaction mass being recirculated back to the reactor as feed.

Despite known processes for the preparation of grafted amorphous olefin rubber or other rubber modified thermoplastics characterized by extremely viscous polymerization mixtures a suitable process has, until the present time, not been developed. Numerous problems face the skilled artisan when dealing with such a polymerization system. Generally, the rubbers employed in the present invention exhibit reduced amounts of unsaturation as compared to, for example, butadiene based rubbers. Because of this fact, such rubbers are greatly desired for improved weathering characteristics. However, conversely, the relative lack of unsaturation presents difficulties in obtaining sufficient grafting in order to provide compatibility with the matrix phase. In order to provide adequate grafting, relatively high levels of initiators, especially free radical generating initiators, are employed. The increased amounts of free radical initiator detrimentally cause the formation of undesirable species such as cross-linked matrix or cross-linked rubber.

Furthermore, amorphous olefin rubbers and EPDM in particular are less compatible with a vinyl aromatic monomer system than are butadiene rubbers especially in the presence of a polar comonomer such as acrylonitrile which greatly reduces the solubility of EPDM rubber in the monomer solution.

A further difficulty with the present monomeric system is that the reaction mixture forms a relatively cohesive and viscous solution. It is desirable in the polymerization to provide agitation of the reaction mixture. Such agitation provides desirable morphology and ensures phase inversion and uniformity of the resulting product. In addition, agitation results in obtaining a steady conversion in the reactor and the contacting of partially converted and phase inverted polymer with incoming feed thereby achieving a superior product. However, due to the cohesive and viscous nature of the reaction mixture, agitation of the reactor has now been discovered to be an insufficient means to mix the reactor contents in order to obtain all of these desired goals. Presently available designs for reactors involving various agitator designs have proven unacceptable over a wide variety of operating conditions but particularly when the mixture becomes gelatinous and difficult to stir. A failure to produce uniformity in the reaction mixture over a wide range of reaction conditions may allow localized overheating forming a nonuniform or inferior product, or the formation of undesirable byproducts. These undesirable byproducts such as gels, cross-linked rubbers, and high molecular weight polymers, adhere not only to the reactor walls but to the agitator itself, thereby further decreasing efficiency.

It might appear at first that improved impellar designs could be employed in order to assure thorough and uniform mixing. However, it is generally known that designs of various agitating devices while perhaps solving one problem or obtaining better results under certain operating conditions, generally result in loss of performance under different operating conditions. In dealing with the polymeric mixtures of the instant invention, the present inventors have found that regardless of agitator design it has not been possible to obtain adequate and thorough mixing of the reaction mixture. Partially due to the previous mentioned gelatineous nature of the reaction mixture, helical mixers, as are normally employed, do not tend to result in adequate and thorough mixing of the reactor contents. Consequently, polymerization involving only

normally available means of agitation tend, over a period of time, to result in accumulations inside the reactor. After operation for a period of time it has been found necessary to stop the reaction, dismantle the reactor and remove such accumulation. Whether employing physical means to remove such accumulations or solvents such as cyclohexanone, the loss in reactor performance and consequent inefficiency as well as the preparation of non-uniform polymer are problems which currently confront the resin producer.

It would be desirable to provide an improved process for preparing a weatherable rubber modified polymer or copolymer. It would further be desirable to provide such a process which provides for improved efficiency and longer operation without the need to dismantle and clean the reactors. It would further be desirable to provide an improved process providing for greater uniformity of the product. It is to the obtainment of these desirable ends that the present invention is directed.

According to the present invention, there is provided a continuous process for the preparation of a rubber modified vinyl aromatic polymer wherein a polymerization mixture consisting essentially of a rubber selected from the group consisting of copolymers of ethylene and at least one other alpha monoolefin having from 3 to 6 carbon atoms; terpolymers of ethylene and at least one alpha monoolefin having 3 to 16 carbon atoms and a diene; chlorinated polyethylene; and acrylate rubbers, vinyl aromatic monomer, and optionally a copolymerizable polar comonomer, aromatic solvent and initiator is continuously charged in one or more feed streams at a rate $R_1$ to the entrance of a reactor operating under essentially steady conversion conditions, and a reaction mixture comprising at least some grafted rubber modified vinyl aromatic polymer is continuously removed therefrom, characterized by removing an additional amount of a reaction mixture comprising at least some grafted rubber modified vinyl aromatic polymer at a rate $R_2$ and reintroducing the same to the reactor at a point in close proximity to the entrance thereof, the rates $R_2$ and $R_1$ being selected so that $R_2/R_1$ is from 3 to 60, preferably from 3 to 5, more preferably from 10 to 30.

By means of the present invention is has been found that the maintenance of essentially steady conversion conditions within such reactor by the use, for example, of stirring or other means of agitation is significantly improved. Compared to a process not employing recirculation the present invention results in improved product quality and increased conversion rates.

Figure 1 discloses a single reactor with associated connecting means and pumping means according to the invention.

Figure 2 discloses two reaction vessels in cooperative arrangement according to the invention.

Figure 3 discloses two reaction vessels in cooperative arrangement according to the invention and an additional reactor for receipt of unrecirculated polymerization product.

Figure 4 discloses two reaction vessels in cooperative arrangement according to the invention wherein styrene and acrylonitrile are combined prior to addition or charging to the first reaction vessel in a preheating zone with mixing so as to prevent precipitation of weatherable rubber.

Vinyl aromatic monomers usefully employed according to the present invention include, by way of examples, styrene and its ring substituted derivatives such as ring halogenated or ring alkylated styrenes and alpha alkyl substituted styrenes such as alpha-methyl styrene. Mixtures of vinyl aromatic monomers may suitably be employed if desired. A preferred vinyl aromatic monomer is styrene.

A comonomer is optionally additionally present. Because the advantages of the present process are most noteworthy in a comonomeric system, it is preferred that a copolymerizable polar comonomer is additionally present in the process. However, it will be appreciated that many advantages in the present process will be realized regardless of whether the reaction also involves such a comonomer.

Copolymerizable polar comonomers usefully employed according to the present invention include polymerizable ethylenically unsaturated anhydrides such as maleic anhydride, and those monomers corresponding to the formula

$$CH_2{=}\overset{\overset{\displaystyle R}{|}}{C}{-}X$$

wherein R is selected from the group consisting of hydrogen and alkyl having from 1 to 5 carbon atoms, and X is selected from the group consisting of

$$-\overset{\overset{\displaystyle O}{\|}}{C}-OR, \qquad -C{\equiv}N, \qquad \text{and} \qquad -\overset{\overset{\displaystyle O}{\|}}{C}-NH_2$$

and R is as previously defined. A preferred copolymerizable polar comonomer is acrylonitrile.

The rubbers usefully employed in the present invention are elastomers that are extremely low in ethylenic unsaturation. Included are copolymers of ethylene and at least one other alpha monoolefin having from 3 to 16 carbon atoms such as propylene, and isobutylene; terpolymers of ethylene and at least one other alpha monoolefin having 3 to 16 carbon atoms, and a diene, e.g EPDM rubbers; chlorinated polyethylenes (CPE); or acrylate rubbers. Especially suitable rubbers are EPDM rubbers, especially amorphous terpolymers comprising ethylene, propylene and a non-conjugated diene such as dicyclo pentadiene, 1,4-hexadiene and alkenyl norbornenes. Such amorphous olefin rubbers are well known in the

art having been previously described in U.S. Patents 2,933,480; 3,211,709; 3,300,450; and others. In general while such weatherable rubbers as previously described provide desired improved resistance to degradation in sunlight the rubbers are not easily compatabilized in the vinyl aromatic monomer system. More specifically such rubbers tend to produce an extremely viscous polymerization mixture and to be difficult to graft with vinyl aromatic matrix. Until a grafted rubber composition is attained the rubber may not dissolve in the monomer mixture resulting in premature separation of the rubber phase.

Several techniques may be employed in order to prevent premature separation of the rubber. In one embodiment of the invention, the vinyl aromatic monomer, optional copolymerizable polar comonomer and weatherable rubber may be combined in suitable solvent and preheated to an elevated temperature sufficient to avoid precipitation of the rubber prior to charging to the reactor. Alternatively, especially where a polar comonomer which results in precipitation of the rubber is to be employed the reactor may be charged first with vinyl aromatic monomer rubber and optional solvent and the copolymerizable polar comonomer added separately, preferably after steady conversion conditions are obtained.

One or more of the previously known initiators is employed. A choice of initiator may be determined by reaction conditions, notably the temperature. It is desirable to prevent localized over heating due to the use of initiators having extremely short half lives. Suitable initiators are those known as free radical polymerization initiators. Examples include azo initiators such as azobisdiisobutyronitrile and organic peroxides such as benzoyl peroxide, tertiary butyl peroctoate, tertiary butyl hydroperoxide, tertiary butyl perbenzoyl peroxide, 1,1-ditertiary butyl peroxycyclohexane, and dicumyl peroxide. Mixtures of one or more initiators may be employed. In fact, in a preferred embodiment in view of the fact that the weatherable rubber employed in the present invention is only with difficulty graftable, relatively high amounts of initiator are employed according to the present invention. While the amount of initiator used will vary depending on initiator identity, solvent, solvent amount, tempertaure etc., general ranges may be determined. Suitably the amount of initiator is from 100 to 5,000 parts per million, based on weight of monomers and olefin rubber. Preferably from 1,000 to 2,000 parts per million are employed.

Solvents which suitably may be employed include aromatic solvents such as benzene, and alkyl substituted benzenes with one or more alkyl groups containing from 1 to 4 carbon atoms such as toluene, dimethyl benzene, xylene and ethyl benzene. A preferred solvent is toluene or ethylbenzene or a mixture of these two solvents.

The reaction is preferably conducted at elevated temperatures above 90°C, most preferably the reaction is conducted at a temperature above 100°C.

The invention is more conveniently explained in its various embodiments by reference to the accompanying figures. In Figure 1 the invention in its simplest embodiment employs a single reaction vessel having associated connecting means and pumping means to recirculate reaction mixture from the exit to a point near the entrance of the reactor.

Another embodiment of the present invention, illustrated in Figure 2, employs two reaction vessels in cooperative arrangement to form the previously described reactor such that polymerization mixture removed from the exit of a first reaction vessel is charged to the entrance of the second reaction vessel optionally with the addition of a further amount of the same or different polymerization initiator. More than two reaction vessels could also be employed. If more than two reaction vessels comprise the reactor the above procedure is repeated further until all the reaction vessels are in use. After proceeding through the last reaction vessel, the polymerization mixture is again removed at the exit thereof and at least some of the removed reaction mixture is recharged to the entrance of the first reaction vessel. Removal of the reaction mixture and recharging of the mixture from the last reaction vessel to the first reaction vessel may be accomplished by one or more gear pumps or other suitable positive displacement devices. Polymerization product exiting from the last reaction vessel and not recirculated to the entrance of the first reaction vessel may be recovered if desired, or more preferably charged to one or more additional reactors. Such additional reactors may operate with recirculation as explained in the present invention or may be operated under plug flow conditions. Figure 3 depicts this system of operation additionally showing the presence of more than one pump and optional multiple initiator feed streams. In a particularly preferred design of the present invention, two reaction vessels are operated in combination as one reactor in order to provide recirculation and a third reactor of essentially equivalent volume to each of the first two reaction vessels is operated in essentially plug flow operating conditions at elevated temperatures above those of the first two reaction vessel. Polymer removed from the final reactor is recovered by devolatilization according to conventional techniques.

Because the presently designed recirculated reactor operates essentially according to a steady conversion rate it is possible to add additional monomers or additional initiators to the reactor at various points throughout the reactor system. For example, in order to achieve thorough mixing of additional comonomers or of initiator it is sometimes desirable that the initiator or comonomers be charged at a point of intensive mixing. Accordingly, in one embodiment of the invention also illustrated in Figure 3, monomers and initiator are added to the connecting means joining the two reaction vessels. Because such connecting means are generally of smaller cross sectional area compared to the reaction vessels themselves, more rapid dispersion of the initiators is achieved. In a further embodiment of the invention, illustrated in Figure 4, monomers may be combined prior to addition or charging to the first reaction vessel in a preheating zone with mixing so as to prevent precipitation of weatherable rubber.

In a typical operation under the present invention, the recirculated reactor (comprising one or more reaction vessels) is operated under steady conversion conditions so as to provide a conversion of monomers of from 50 percent to 90 percent and a solids content comprising principally grafted amorphous olefin rubber modified copolymer, from 25 percent to 50 percent. Residence times in the reaction vessels and reaction temperatures may be adjusted in order to arrive at the above desired operating conditions. Preferably the reaction mixture is removed from the recirculated reactor at a conversion of from 60 to 70 percent and then charged to a final reactor operating at further elevated temperatures as illustrated in Figure 3. In the final reactor a conversion of monomers of from 85 to 100 percent and a solids content of 35 to 60 percent by weight is preferably achieved. In this preferred process it is desirable to employ increased reaction temperatures in the final reactor compared to those of the initial recirculated reactor. For example, suitable temperatures in the recirculated reactor may be from 95°C to 110°C while temperatures in the final reactor may be controlled in the range of from 105°C to 120°C. Accordingly, initiators may be selected so as to provide suitable levels of radical initiators in view of the different reaction temperatures employed. The reaction mixture exiting the final reactor is then charged to a devolatilizer operating under known devolatilizing conditions so as to remove entrained solvent and unreacted monomers.

Having described the invention, the following examples are provided as further illustrations thereof and are not to be construed as limiting. Unless otherwise stated all percentages are weight percentages.

Example 1

Feed is prepared by dissolving 14.5 lbs (6.6 kg) of EPDM rubber (Royalene 505 available from Uniroyal Corporation) in 47 lbs. (21.3 kg) of toluene and 38.5 lbs. (17.5 kg) of styrene. The Royalene 505 was understood to have a Mooney viscosity of 55, an ethylene/propylene ratio of 57:43 and an ENB constant of 8.5 percent. Dissolving is done at room temperature with agitation. This EPDM solution is pumped continuously at 400 g/hr to a mixer fitted with a pin agitator and having a volume of 200 $cm^3$. To this mixer is also fed 57 g/hr of acrylonitrile. A temperature of 100°C is maintained in the mixer so that a homogeneous solution of EPDM in the toluene, styrene and acrylonitrile is produced. This homogeneous solution is continuously fed to the entrance of the first of a series of stirred tube reactors which are connected in series. The first two of the stirred tube reactors additionally operate with recirculation so as to effectively constitute a single reactor. Each of the three reactors has a volume of 1400 $cm^3$ with the first having an L/D of 7 and the second and third and L/D of 3.5. To the entrance of the first stirred tube reactor is also fed a 0.6 percent solution of t-butylperoctoate in toluene. The addition rate of this free radical initiator solution is 34 g/hr. The pin type agitator is rotated at 80 rpm. The partially polymerized material is continuously removed from the exit of the first stirred tube reactor and transferred to the entrance of the second stirred tube reactor also containing a pin type agitator rotating at 80 rpm. Another addition of a 0.6 percent solution of t-butylperoctoate in toluene at a rate of 35 g/hr is made to the partial polymer just prior to entering the second stirred tube reactor.

Recirculation of the material in the first two stirred tube reactors is accomplished by pumping material coming from the exit of the second stirred tube reactor to a point near the entrance of the first stirred tube reactor where it mixes with the incoming EPDM solution. Recirculation rates are such that the ratio of the amount of the reaction mixture entering the first stirred tube reactor to the amount of new feed entering is 10:1.

The solids content of the material coming from the exit of the second stirred tube reactor is 39 percent and the temperature within the first and second stirred tube reactors is kept at 105°C±2°C. Partially polymerized material is continuously forwarded from the exit of the second stirred tube reactor to the entrance of the third stirred tube reactor. Additional free radical initiator, 1,1-ditertiary butyl cyclohexane, in a 0.35 percent solution in toluene is added to the partially polymerized mixture at a rate of 35 g/hr immediately before it enters the last reactor. The temperature in the first half of the final reactor is controlled at 122°C while that in the second half is 133°C. The pin type agitator is rotated at 12 rpm. A solution containing 25 percent mineral oil, 2.5 percent Irganox 1076® and 1.5 percent dicumylperoxide in toluene is added to the partial polymer at a rate of 28 g/hr at a point 2/3 of the way between the entrance and exit of the third stirred tube reactor.

Material coming from the exit of the final reactor contains 48 percent solids. The reaction mixture is forwarded to a devolatilizer consisting of a vacuum pot with a flat heater maintained at 218°C and 57 mm Hg (7.6 kPa) followed by a devolatilizing extruder maintained at 225°C and 57 mm Hg (7.6 kPa). A die at the end of the extruder forms the devolatilized polymer into a strand which is then cut into pellets by an on-line cutter.

The EPDM reinforced plastic made by this process has a compression molded notched Izod impact of 11.0 ft.lbs./in (5.88 J/cm) notch, tensile yield=4500 psi (31 MPa), tensile rupture=4400 psi (30 MPa), elongation at rupture=5.8 percent. The melt flow rate was 1.5 g/10 min at ASTM conditions 230/3.8. The volume average rubber particle diameter was 0.96 micrometre.

Examples 2—4

A further group of experiments was run on the same equipment as that used in Example 1. Table 1 below summarizes the recirculation rates that were used and some of the product properties that were obtained.

TABLE 1

| Exp No. | $R_2:R_1$ | Particle size micrometres | Impact strength (ft. lbs/in (J/m) notch) |
|---|---|---|---|
| 2 | 8:1 | 1.11 | 11.4 (6.09) (but variable) |
| 3 | 10:1 | 1.48 | 12.2 (6.57) (but variable) |
| 4 | 20:1 | 1.13 | 12.0 (6.41) (11.6(6.19)—12.2(6.51)) |

This group of experiments demonstrates the fact that on occasion it is preferred to use a recirculation ratio of 20:1 rather than 10:1.

Examples 5—7

A further group of experiments was run, but the equipment used was a pilot plant rather than the miniplant used in Examples 1—4. Table 2 below summarizes the recirculation rates that were used and some of the product properties obtained.

TABLE 2

| Exp No. | $R_2:R_1$ | Particle size micrometres | Impact strength (ft. lbs/in (J/cm) notch) |
|---|---|---|---|
| 5 | 20:1 | 1.34 | 12.8 (6.83) |
| 6 | 30:1 | 1.51 | 11.7 (6.25) |
| 7 | 20:1 | 1.75 | 12.0 (6.41) |

This group of experiments indicated that recirculation rates as high as 30:1 can be used to make a product with reasonably uniform and high Izod impact strength.

Examples 18—20

A large number of other experiments were carried out with other sources of rubber substituted for Royalene 505; and with other variations in processing conditions. Recirculation in ratios up to 58:1 were used to make a satisfactory product. However, in general, the power consumption became prohibitive at recirculation rates in excess of 50.

**Claims**

1. A continuous process for the preparation of a rubber modified vinyl aromatic polymer wherein a polymerization mixture consisting essentially of a rubber selected from the group consisting of copolymers of ethylene and at least one other alpha monoolefin having from 3 to 6 carbon atoms; terpolymers of ethylene and at least one alpha monoolefin having 3 to 16 carbon atoms and diene; chlorinated polyethylene; and acrylate rubbers, vinyl aromatic monomer, and optionally a copolymerizable polar comonomer, aromatic solvent and initiator is continuously charged in one or more feed streams at a rate $R_1$ to the entrance of a reactor operating under essentially steady conversion conditions, and a reaction mixture comprising at least some grafted rubber modified vinyl aromatic polymer is continuously removed therefrom, characterized by removing an additional amount of a reaction mixture comprising at least some grafted rubber modified vinyl aromatic polymer at a rate of $R_2$ and reintroducing the same to the reactor at a point in close proximity to the entrance thereof, the rates $R_2$ and $R_1$ being selected so that $R_2/R_1$ is from 3 to 60.

2. A process as claimed in Claim 1, wherein $R_2/R_1$ is from 3 to 50.

3. A process as claimed in Claim 2, wherein the ratio $R_2/R_1$ is from 10 to 30.

4. A process as claimed in any one of the preceding Claims, wherein the copolymerizable comonomer is selected from the group consisting of polymerizable ethylenically unsaturated anhydrides and monomers corresponding to the formula

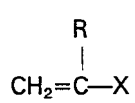

wherein R is selected from the group consisting of hydrogen and alkyl having from 1 to 5 carbon atoms, and X is selected from the group consisting of

$$-\overset{\overset{\displaystyle O}{\|}}{C}-OR, \qquad -C{\equiv}N, \qquad \text{and} \qquad -\overset{\overset{\displaystyle O}{\|}}{C}-NH_2$$

and R is as previously defined.

5. A process as claimed in any one of the preceding Claims, wherein the rubber is an amorphous olefin rubber.

6. A process as claimed in Claim 5, wherein the amorphous olefin rubber is a terpolymer of ethylene, propylene and a non-conjugated diene.

7. A process as claimed in any one of the preceding Claims, wherein the vinyl aromatic monomer is styrene.

8. A process as claimed in any one of the preceding Claims, wherein the copolymerizable polar comonomer is acrylonitrile.

9. A process as claimed in any one of the preceding Claims, wherein the solvent comprises toluene, ethylbenzene or a mixture thereof.

10. A process as claimed in any one of the preceding Claims, wherein the reactor comprises at least two reaction vessels in cooperative arrangement such that reaction mixture is reintroduced to the reactor by removing from the exit of the first reaction vessel, charging to the second and any subsequent reaction vessel, removing from the exit of the second or a subsequent reaction vessel and charging to the first reaction vessel.

11. A process according to Claim 10, wherein the reactor comprises at least three reaction vessels and some of the reaction mixture removed from the exit of the second reaction vessel is charged to the third reaction vessel operating under polymerization conditions.

12. A process according to Claim 11, wherein polymer is recovered by devolatilization of the reaction mixture recovered from the third reaction vessel.

## Patentansprüche

1. Kontinuierliches Verfahren zur Herstellung eines kautschukmodifizierten, vinylaromatischen Polymeren, bei dem eine Polymerisationsmischung, im wesentlichen bestehend aus einem Kautschuk, ausgewählt aus der Gruppe bestehend aus Copolymeren des Ethylens und wenigstens eines anderen alpha-Monoolefins mit 3 bis 6 Kohlenstoffatomen, Terpolymeren von Ethylen und wenigstens einem alpha-Monoolefin mit 3 bis 16 Kohlenstoffatomen und Dien, chloriertem Polyethylen und Acrylatkautschuken, vinylaromatischen Monomeren und gegebenenfalls einem copolymerisierbaren polaren Comonomeren, aromatischem Lösungsmittel und Härter, kontinuierlich in einen oder mehreren Einspeiseströmen mit der Geschwindigkeit $R_1$ in den Einlaß des Reaktors eingespeist werden, welcher im wesentlichen unter gleichen Umsetzungsbedingungen betrieben wird, und eine Reaktionsmischung, die wenigstens etwas gepfropftes, kautschukmodifiziertes, vinylaromatisches Polymer enthält, hieraus kontinuierlich entfernt wird, dadurch gekennzeichnet, daß man einen weiteren Anteil einer Reaktionsmischung, der wenigstens etwas gepropftes, kautschukmodifiziertes, vinylaromatisches Polymer enthält, mit einer Geschwindigkeit $R_2$ entfernt, und diesen dem Reaktor an der Stelle, welche sich in der größten Nähe des Einlasses befindet, wieder zuführt, wobei die Geschwindigkeiten $_2$ und $R_1$ so bemessen werden, daß $R_2/R_1$ 3 bis 60 beträgt.

2. Verfahren gemäß Anspruch 1, dadurch gekennzeichnet, daß $R_2/R_1$ 3 bis 50 beträgt.

3. Verfahren gemäß Anspruch 2, dadurch gekennzeichnet, daß das Verhältnis $R_2/R_1$ 10 bis 30 beträgt.

4. Verfahren gemäß irgendeinem der vorstehenden Ansprüche, dadurch gekennzeichnet, daß das copolymerisierbare Comonomere ausgewählt ist aus der Gruppe bestehend aus polymerisierbaren, ethylenisch ungesättigten Anhydriden und Monomeren, entsprechend der Formel

$$CH_2{=}\overset{\overset{\displaystyle R}{|}}{C}-X,$$

wobei R ausgewählt ist aus der Gruppe bestehend aus Wasserstoff und Alkyl mit 1 bis 5 Kohlenstoffatomen, und X ausgewählt ist aus der Gruppe bestehend aus

$$-\overset{\overset{\displaystyle O}{\|}}{C}-OR, \qquad -C{\equiv}N, \qquad \text{und} \qquad -\overset{\overset{\displaystyle O}{\|}}{C}-NH_2$$

und R die vorstehend beschriebenen Bedeutungen hat.

5. Verfahren gemäß irgendeinem der vorstehenden Ansprüche, dadurch gekennzeichnet, daß der Kautschuk ein amorpher Olefinkautschuk ist.

6. Verfahren gemäß Anspruch 5, dadurch gekennzeichnet, daß der amorphe Olefinkautschuk ein Terpolymer aus Ethylen, Propylen und einem nicht konjugiertem Dien ist.

7. Verfahren gemäß irgendeinem der vorstehenden Ansprüche, dadurch gekennzeichnet, daß das vinylaromatische Monomer Styrol ist.

8. Verfahren gemäß irgendeinem der vorstehenden Ansprüche, dadurch gekennzeichnet, daß das copolymerisierbare, polare Comonomere Acrylnitril ist.

9. Verfahren gemäß irgendeinem der vorstehenden Ansprüche, dadurch gekennzeichnet, daß das Lösungsmittel Toluol, Ethylbenzol oder deren Mischung enthält.

10. Verfahren gemäß irgendeinem der vorstehenden Ansprüche, dadurch gekennzeichnet, daß der Reaktor wenigstens zwei miteinander in Verbindung stehende Reaktionsgefäße enthält, wobei die Reaktionsmischung dem Reaktor in der Weise wieder zugeführt wird, indem sie aus dem Ausgang des ersten Reaktionsgefäßes abgezogen, dem zweiten oder irgendeinem nachfolgenden Reaktionsgefäß zugeführt, aus dem Ausgang des zweiten oder irgendeines nachfolgenden Reaktionsgefäßes abgezogen wird in das erste Reaktionsgefäß eingespeist wird.

11. Verfahren gemäß Anspruch 10, dadurch gekennzeichnet, daß der Reaktor wenigstens drei Reaktionsgefäße enthält und ein Teil der Reaktionsmischung aus dem Ausgang des zweiten Reaktionsgefäßes entfernt und in das dritte Reaktionsgefäß eingespeist wird, welches unter Polymerisationsbedingungen betrieben wird.

12. Verfahren gemäß Anspruch 11, dadurch gekennzeichnet, daß das Polymer durch Abdampfen der aus dem dritten Reaktionsgefäß abgezogenen Reaktionsmischung gewonnen wird.

## Revendications

1. Procédé en continu pour la préparation d'un polymère vinyl-aromatique modifié au caoutchouc, dans lequel un mélange de polymérisation qui comprend essentiellement un caoutchouc choisi dans le groupe comprenant les copolymères de l'éthylène et d'au moins une autre alpha-monooléfine ayant de 3 à 6 atomes de carbone, les terpolymères de l'éthylène et d'au moins une alpha-monooléfine ayant 3 à 16 atomes de carbone et d'un diène, le polyéthylène chloré, et les caoutchoucs d'acrylate, un monomère vinyl-aromatique et éventuellement un comonomère polaire copolymérisable, un solvant aromatique et un amorceur, est introduit en continu, en un ou plusieurs courants d'alimentation, à un débit $R_1$, à l'entrée d'un réacteur fonctionnant dans des conditions de conversion presque permanente, et un mélange de réaction comprenant au moins une certaine quantité de polymère vinyl-aromatique modifié au caoutchouc greffé est retiré en continu du réacteur, caractérisé en ce qu'on retire une quantité supplémentaire d'un mélange de réaction comprenant au moins une certaine quantité de polymère vinyl-aromatique modifié au caoutchouc greffé à un débit $R_2$ et qu'on la réintroduit dans le réacteur en un point au voisinage immédiat de son entrée, les débits $R_2$ et $R_1$ étant sélectionnés de telle sorte que $R_2/R_1$ soit compris entre 3 et 60.

2. Procédé selon la revendication 1, dans lequel $R_2/R_1$ est compris entre 3 et 50.

3. Procédé selon la revendication 2, dans lequel le rapport $R_2/R_1$ est compris entre 10 et 30.

4. Procédé selon l'une quelconque des revendications précédentes, dans lequel le comonomère copolymérisable est choisi dans le groupe comprenant les anhydrides à insaturation éthylénique polymérisables et les monomères correspondant à la formule

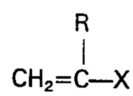

dans laquelle R est choisi dans le groupe comprenant l'atome d'hydrogène et les groupes alkyle ayant de 1 à 5 atomes de carbone, et X est choisi dans le groupe comprenant

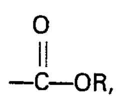 —C≡N, et 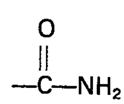

et R est tel que préalablement défini.

5. Procédé selon l'une quelconque des revendications précédentes, dans lequel le caoutchouc est un caoutchouc oléfinique amorphe.

6. Procédé selon la revendication 5, dans lequel le caoutchouc oléfinique amorphe est un terpolymère de l'éthylène, du propylène et d'un diène non conjugué.

7. Procédé selon l'une quelconque des revendications précédentes, dans lequel le monomère vinyl-aromatique est le styrène.

8. Procédé selon l'une quelconque des revendications précédentes, dans lequel le comonomère polaire copolymérisable est l'acrylonitrile.

9. Procédé selon l'une quelconque des revendications précédentes, dans lequel le solvant englobe le toluène, l'éthylbenzène ou un de leurs mélanges.

10. Procédé selon l'une quelconque des revendications précédentes, dans lequel le réacteur comprend au moins deux récipients de réaction dans une disposition d'ensemble telle que l'on réintroduit le mélange de réaction dans le réacteur par prélèvement à la sortie du premier récipient de réaction, introduction dans le second récipient de réaction et tout autre suivant, prélèvement à la sortie du second récipient de réaction ou d'un autre suivant et introductions dans le premier récipient de réaction.

11. Procédé selon la revendication 10, dans lequel le réacteur comprend au moins trois récipients de réaction et une partie du mélange de réaction retiré à la sortie du second récipient de réaction est introduite dans le troisième récipient de réaction fonctionnant dans des conditions de polymérisation.

12. Procédé selon la revendication 11, dans lequel le polymère est récupéré par enlèvement des matiéres volatiles du mélange de réaction récupéré à partir du troisième récipient de réaction.

Fig. 1

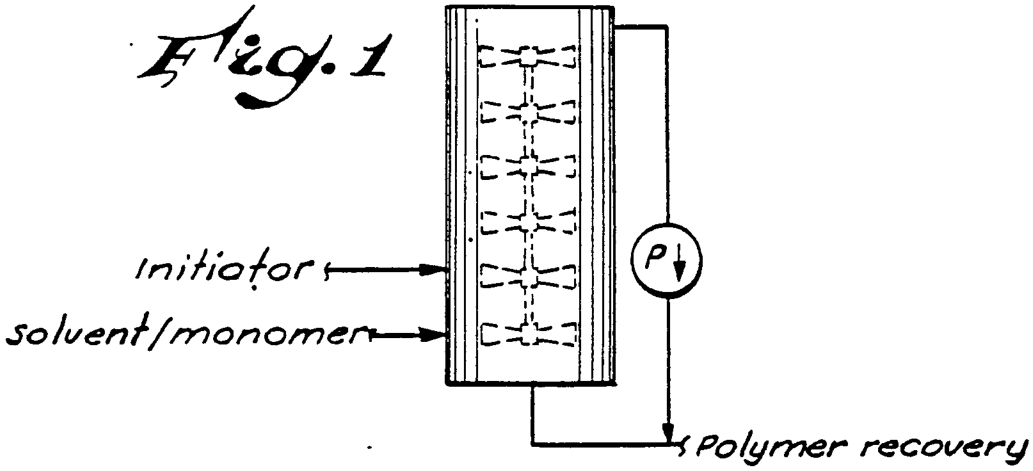
P
Initiator
solvent/monomer
Polymer recovery

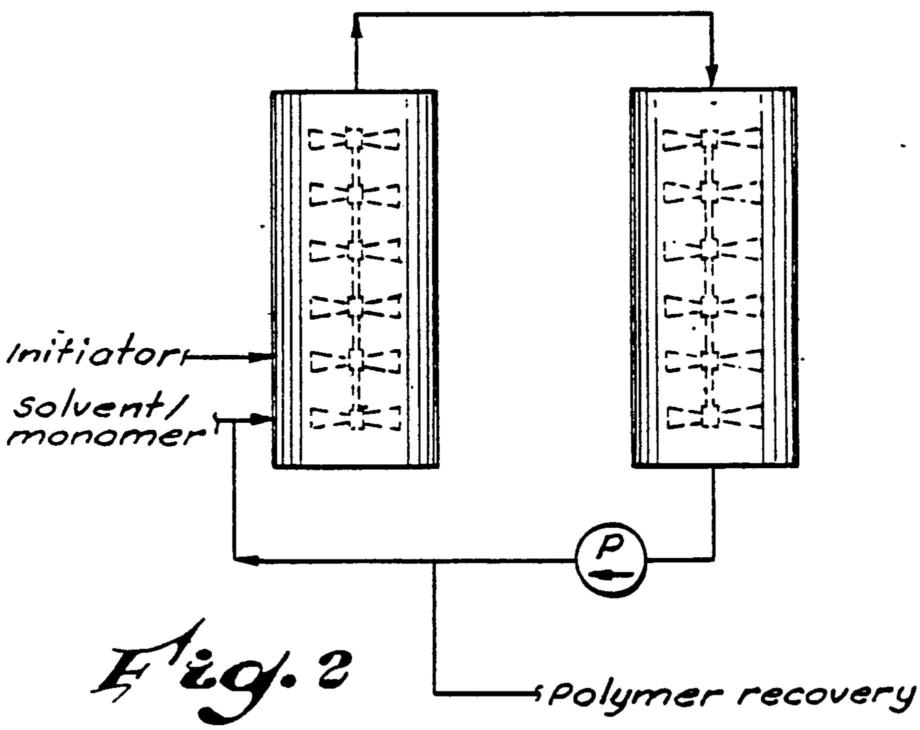
Initiator
solvent/
monomer
P
Polymer recovery

Fig. 2

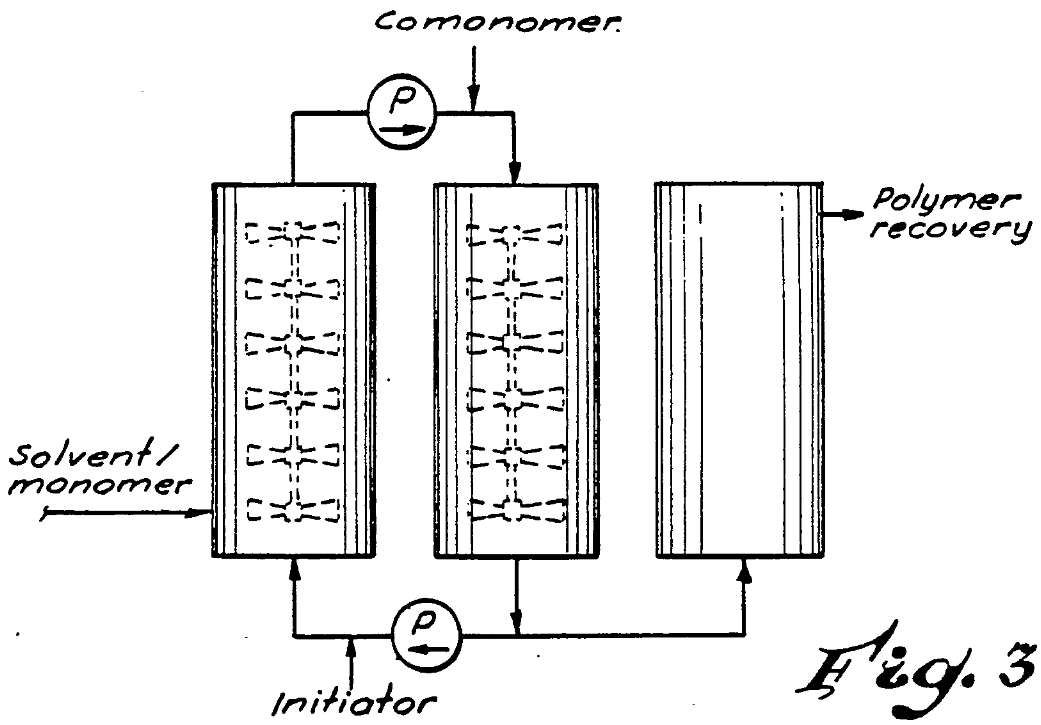
Comonomer
P
Polymer recovery
Solvent/monomer
P
Initiator

Fig. 3

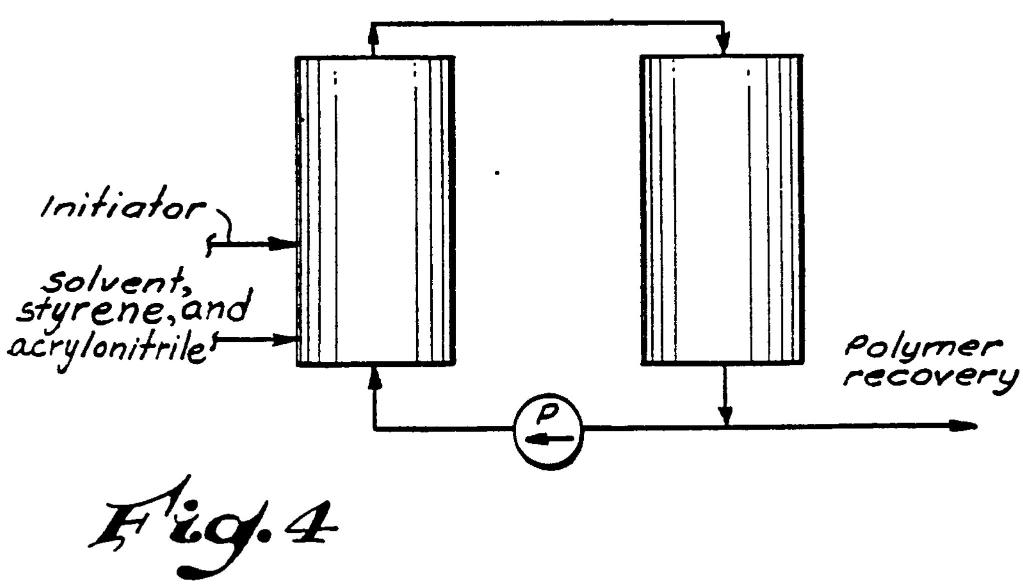
Initiator
solvent, styrene, and acrylonitrile
Polymer recovery
P

Fig. 4